# EUROPÄISCHE PATENTSCHRIFT

(11) **EP 0 640 513 B1**
(45) Veröffentlichungstag und Bekanntmachung des Hinweises auf die Patenterteilung: **14.10.1998**
(21) Anmeldenummer: 94111041.3
(22) Anmeldetag: 15.07.1994
(51) Int. Cl.: B60R 21/06

(54) **Sicherheitsnetzanordnung**
Arrangement of a security web
Dispositif de sécurité à filet

(30) Priorität: 26.08.1993 DE 4328746
(43) Veröffentlichungstag der Anmeldung: 01.03.1995
(73) Patentinhaber: Baumeister & Ostler GmbH & Co., 73773 Aichwald (DE)
(72) Erfinder: Ament, Eduard, D-73773 Aichwald (DE)
(74) Vertreter: Rüger, Rudolf, Dr.-Ing.

(56) Entgegenhaltungen:
- DE-A- 4 010 209
- FR-A- 2 562 007
- US-A- 4 906 020
- ATZ, Bd.88, Nr.11, November 1986, STUTTGART,W. GERMANY Seiten 641 - 648 SCHAPER ET AL. 'SCHUTZ DER INSASSEN VOR EINDRINGENDER LADUNG BEIM UNFALL'

## Beschreibung

Die Erfindung betrifft eine Sicherheitsnetzanordnung zum Schutz der Personen in einem Kombi-PKW.

Bei Kombi-PKW ist üblicherweise der Laderaum gegenüber dem eigentlichen Fahrgastraum weitgehend offen. Die Abgrenzung beschränkt sich im unteren Teil auf die Rücklehne des Rücksitzes, während der Bereich zwischen der Oberkante der Rücksitzlehne und dem Dach völlig frei ist. Es besteht deswegen immer die Gefahr, daß bei einem Auffahrunfall ungesicherte Teile aus dem Laderaum in den Fahrgastraum vorgeschleudert werden und dort die Fahrgäste ernsthaft verletzen. Um dem vorzubeugen, ist beispielsweise aus der DE-A-40 10 209 eine Sicherheitsnetzanordnung bekannt. Diese Sicherheitsnetzanordnung weist ein im Bereich der Oberkante der Rücksitzlehne zu befestigendes Gehäuse auf, in dem drehbar eine Wickelwelle gelagert ist. An der Wickelwelle ist mit einer Längskante ein etwa trapezförmig zugeschnittenes Sicherheitsnetz befestigt. Die von der Wickelwelle abliegende und zu dieser parallel verlaufende Längskante des Sicherheitsnetzes ist an einer Stange angebracht, die eine weitere Verankerungseinrichtung der Sicherheitsnetzanordnung darstellt. Diese Stange kann mit ihren pilzförmig gestalteten Enden in entsprechende Aufnahmetaschen unterhalb des Daches des Kraftwagens eingehängt werden. Auf diese Weise wird das Sicherheitsnetz zwischen der Oberkante der Rücksitzlehne und dem Dach gespannt gehalten. Außerdem weist die bekannte Sicherheitsnetzanordnung Dämpfungselemente in der Verankerungsstange auf, die bei einem Aufprall von aus dem Kofferraum herausgeschleuderten Gegenständen Energie aufzehrt, damit das Sicherheitsnetz nicht reißt.

Es hat sich allerdings herausgestellt, daß bei bestimmten Auffahrunfällen eine Verformung der Karosserie bzw. der Verankerungseinrichtung des Netzes stattfindet, wodurch Spannungsspitzen an den beiden seitlichen Rändern des Sicherheitsnetzes auftreten. Diese Spannungsspitzen können zum Reißen des Sicherheitsnetzes oder zum Abreißen des Sicherheitsnetzes von der Verankerungseinrichtung führen, womit die gesamte Sicherungsanordnung weitgehend unwirksam wird.

Ausgehend hiervon ist es Aufgabe der Erfindung, eine Sicherheitsnetzanordnung zu schaffen, bei der bei einer Verformung der Karosserie bzw. des Netzes nicht die Gefahr besteht, daß vorzeitig das Sicherheitsnetz durch Reißen funktionslos wird.

Diese Aufgabe wird erfindungsgemäß durch die Sicherheitsnetzanordnung mit den Merkmalen des Anspruches 1 gelöst.

Da bei der neuen Anordnung zwischen der Verankerungseinrichtung und dem eigentlichen Sicherheitsnetz eine Längenausgleichseinrichtung angeordnet ist, können unfallbedingte Abstandsvergrößerungen nicht das Sicherheitsnetz abreißen oder durchreißen. Vielmehr spricht die Längenausgleichseinrichtung an und sorgt für eine entsprechende Anpassung an den unfallbedingten Abstand.

Die Längenausgleichseinrichtung ist normalerweise komprimiert bzw. zusammengefaltet und in diesem Zustand fixiert. Damit ist die Sicherheitsnetzanordnung gemäß der Erfindung genauso zu handhaben wie eine Sicherheitsnetzanordnung ohne die Längenausgleichseinrichtung. Erst beim Unfall wird das in der Längenausgleichseinrichtung enthaltene zusätzliche Material freigegeben, um die oben erwähnte Anpassung zu ermöglichen.

Da bei einem Unfall die Außenkontur des Sicherheitsnetzes etwa kissenförmig verformt wird, würde es an sich genügen, wenn die Längenausgleichseinrichtung ausschließlich im Bereich der äußeren Ecken vorgesehen wird. Zur Vereinfachung der Herstellung ist es aber zweckmäßig, die Längenausgleichseinrichtung über die gesamte Breite des Sicherheitsnetzes durchlaufen zu lassen.

Je nach zu erwartender Verformung der Karosserie kann die Längenausgleichseinrichtung an einer oder an den beiden zueinander parallel verlaufenden Längskanten vorgesehen sein, an denen die Längenänderung aufgefangen werden muß.

Eine sehr einfache Längenausgleichseinrichtung besteht in einem flexiblen Flächengebilde, das wenigstens zu einer Falte gelegt ist, wobei die Verriegelungseinrichtung dafür sorgt, daß die Falte erst ausgezogen wird, wenn das in der Falte gespeicherte Material benötigt wird. Das flexible Flächengebilde kann hierzu ein folienförmiges Flächengebilde oder auch ein textiles Flächengebilde, vorzugsweise ein Gewebe sein. Die Verriegelungseinrichtung ist dabei im einfachsten Falle eine Naht, kann aber beispielsweise auch ein Klebestreifen sein, an dem die von der Falte gebildeten mehreren Lagen zunächst einmal stoffschlüssig aneinander haften.

Die Naht hat gegenüber der Klebeverbindung dabei jedoch den wesentlichen Vorteil, daß sie weitgehend alterungsbeständig ist, während bei einer Klebeverbindung infolge des Alterns entweder die Haftung gegenüber dem gewünschten Wert vergrößert oder verkleinert wird. Bei einer Verkleinerung der Haftung könnte die Falte vorzeitig aufgehen, während bei einer Vergrößerung der Haftung möglicherweise die Längenausgleichseinrichtung in Gestalt der eingeschlagenen Falte unwirksam wird.

Wie beim Stand der Technik kann bei der neuen Sicherheitsnetzanordnung die Verankerungseinrichtung beispielsweise von einer über die gesamte Breite durchgehenden Stange gebildet werden, die endseitig in entsprechende Aufnehmer der Karosserie einzuhängen ist. Die andere Kante dagegen kann, ebenfalls wie beim Stand der Technik, an einer Wickelwelle verankert sein.

Eine besonders einfache Ausführungsform besteht in der Verwendung eines textilen Streifens, dessen Länge der Breite des Sicherheitsnetzes entspricht. Dieser Streifen ist mit einer Längskante an dem Sicherheitsnetz angenäht und führt von dort zur Verankerungseinrichtung, von wo aus er unter Ausbildung einer über die gesamte Länge des Sicherheitsnetzes sich erstreckende Schlaufe zu dem Sicherheitsnetz zurückführt. Dadurch ist es möglich, die Falten im Inneren zwischen den beiden Lagen des Streifens zu verstecken.

In der Zeichnung ist ein Ausführungsbeispiel des Gegenstandes der Erfindung dargestellt. Es zeigen:
- Fig. 1: eine Sicherheitsnetzanordnung gemäß der Erfindung in einer Ansicht aus dem Laderaum eines Kombi-PKWs während eines Auffahrunfalls,
- Fig. 2: einen Ausschnitt aus der Sicherheitsnetzanordnung nach Fig. 1 mit ausgezogener Längenausgleichseinrichtung und
- Fig. 3: eine Draufsicht auf eine schmale Kante der Sicherheitsnetzanordnung nach Fig. 1 vor dem Wirksamwerden der Längenausgleichseinrichtung.

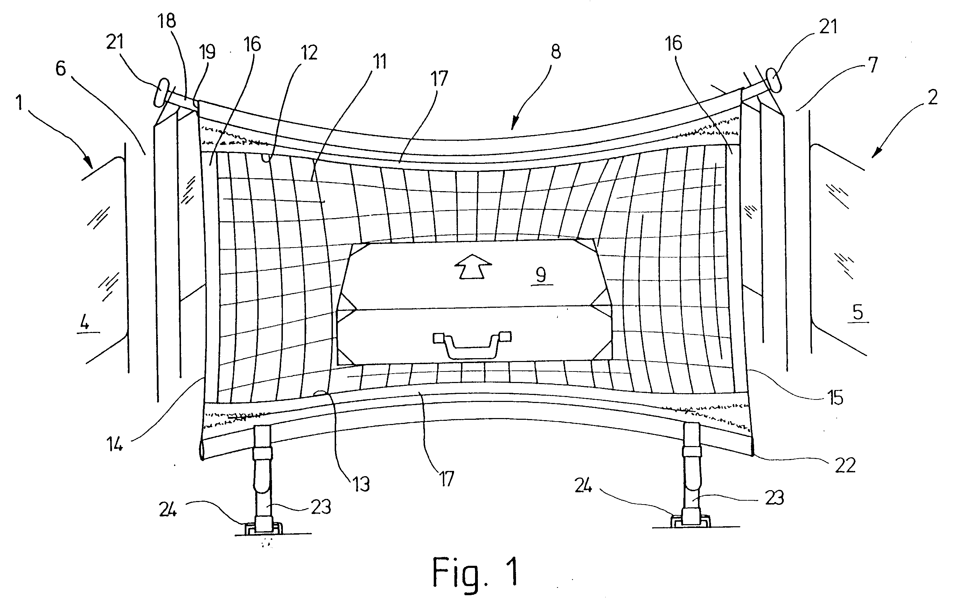

Fig. 1 zeigt stark schematisiert einen Heckbereich eines Kombi-PKW, wobei andeutungsweise dessen linke und rechte Seitenwand 1, 2 mit darin befindlichen Seitenfenstern 4, 5 veranschaulicht ist. An dem Übergang zu dem Fahrgastraum befinden sich schematisiert gezeigte Säulen 6, 7. Somit zeigt Fig. 1 einen Blick aus dem Heckbereich oder Laderaum in Richtung auf den eigentlichen Fahrgastraum. Dort, wo die beiden Räume ineinandergehen, also etwa auf Höhe der beiden Säulen 6, 7 befindet sich eine Sicherheitsnetzanordnung 8, die dazu dient, den Laderaum vom Fahrgastraum so weit abzutrennen, daß keine größeren Teile bei einem Auffahrunfall aus dem Laderaum in den Fahrgastraum eindringen können. Größere Teile, wie ein in Fig. 1 schematisch dargestellter Koffer 9, sollen von der Sicherheitsnetzanordnung 8 abgefangen werden, und zwar bei solchen Verzögerungen, bei denen, ohne Netz die nach vorne fliegenden Teile die Passagiere ernsthaft verletzen würden.

Die Sicherheitsnetzanordnung 8 besteht aus einem etwa rechteckigen Sicherheitsnetz 11, das von einer oberen Längskante 12, einer unteren Längskante 13 sowie zwei seitlichen Längskanten 14 und 15 begrenzt ist. Die beiden seitlichen Längskanten 14 und 15 sind von einem angenähten Band 16 eingefaßt.

Obzwar in Fig. 1 das Sicherheitsnetz 11 etwa rechteckig dargestellt ist, versteht sich, daß es in seiner äußeren Kontur an die Öffnung am Übergang zwischen dem Laderaum zu dem Fahrgastraum angepaßt ist. Üblicherweise beginnt es deswegen im Bereich der Oberkante der Rücksitzlehne und reicht bis knapp unterhalb des Daches. In Fig. 1 sind weder das Dach noch die Oberkante der Rücksitzlehne gezeigt, da dies für das Verständnis der Erfindung nicht notwendig ist.

Sowohl die obere Längskante 12 als auch die untere Längskante 13 sind jeweils mit einer eigenen Längenausgleichseinrichtung 17 versehen, die über die gesamte Breite des Sicherheitsnetzes 11 durchgeht, also von der Längskante 14 bis zu der Längskante 15 reicht.

Um das Sicherheitsnetz 11 in der erläuterten Weise aufspannen zu können, befindet sich im Bereich der oberen Längskante 12 eine an der Längenausgleichseinrichtung 17 befestigte Verankerungseinrichtung in Gestalt eines zylindrischen Rohres 18, das aus einer entsprechenden Schlaufe 19 der Längenausgleichseinrichtung 17 endseitig heraussteht. An seinen Enden trägt das Rohr 18 pilzartige Köpfe 21, mit denen es beidseits in entsprechenden Taschen der beiden Säulen 6 und 7, beispielsweise der C-Säule, eingehängt ist.

Auch im Bereich der unteren Längskante 13 befindet sich eine Verankerungseinrichtung, wiederum in Gestalt eines Rohres, das in einer entsprechenden Schlaufe 22 der unteren Längenausgleichseinrichtung 17 eingeführt ist. Zwei Schnallen 23, die gegenüber den seitlichen Längskanten 14, 15 ein Stück weit zurückversetzt und in Bügeln 24 verankert sind, halten das Sicherheitsnetz 11 im Bereich seiner unteren Längskante 13 fest. Die Bügel 24 können sich an der Rücksitzlehne oder am Boden des Laderaums befinden.

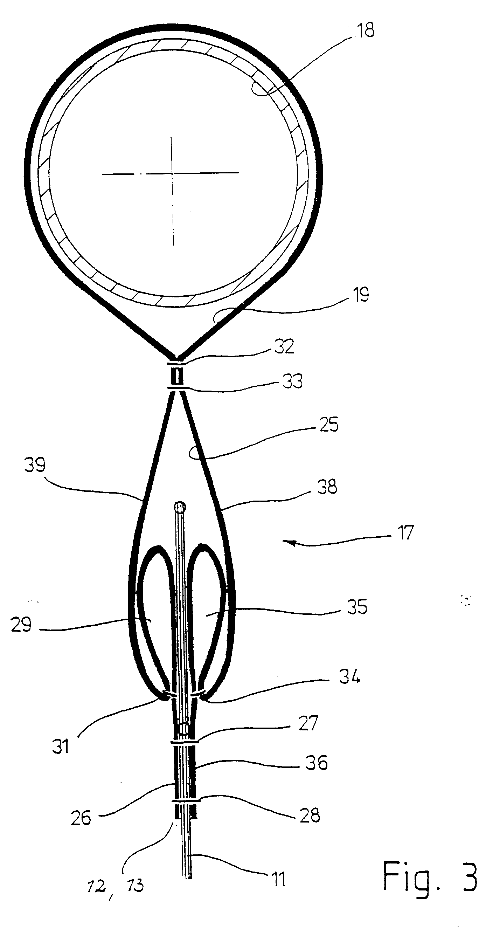

Der Aufbau der Längenausgleichseinrichtung 17 ist aus dem in Fig. 3 gezeigten Schnitt bzw. der Seitenansicht auf eine der beiden vertikal verlaufenden Längskanten 14 und 15 zu erkennen. Danach besteht die Längenausgleichseinrichtung 17 aus einem Gewebestreifen 25, dessen eine Kante 26 mit zwei Nähten 27 und 28 an der betreffenden Längskante, also der oberen oder der unteren Längskante 12, 13 an das Sicherheitsnetz 11 angenäht ist.

Ausgehend von der unteren Kante 26 führt der Gewebestreifen zunächst einmal,durch die beiden Nähte 27 und 28 erzwungen, parallel zu dem Sicherheitsnetz 11 nach oben und bildet oberhalb der oberen Naht 27 einen schlauchartigen Abnäher 29, in dem das Material des Gewebestreifens 25 eine Falte bildet, die durch eine Naht 31 gesichert ist. Ausgehend von dieser Naht 31 führt das Material des Gewebestreifens 25 an der von dem Sicherheitsnetz 11 abliegenden Seite des Abnähers 29 zu der Verankerungseinrichtung in Gestalt des Rohres 18, um die der Gewebestreifen 25 um volle 360^{o} herumführt. Die hierdurch gebildete und bereits erwähnte Schlaufe 19 ist unterhalb der Stange 18 mit zwei zueinander parallelen Geradstichnähten 32 und 33 gesichert.

Von der unteren Naht 33 führt der Gewebestreifen 25 zurück zu dem Sicherheitsnetz 11, und zwar auf dessen anderer Seite, wobei auf der Höhe der Naht 31 eine weitere Naht 34 angebracht ist, die aus dem Gewebestreifen 25 eine zweite Falte oder einen zweiten Abnäher 35 abteilt, der, bezogen auf das Sicherheitsnetz 11, auf der anderen Seite liegt wie der Abnäher 29 und die gleiche Größe hat.

Unterhalb der Naht 34 schließt sich ein glatter bandförmiger Bereich 36 an, der sich mit dem bandförmigen Bereich 26 überdeckt, wobei zwischen diesen beiden bandförmigen Bereichen 26 und 36 das Sicherheitsnetz 11 mittels der beiden durch beide Bereiche 26 und 36 hindurchgehenden Geradstichnähte 27 und 28 verbunden ist.

Die Längenausgleichseinrichtung 17 im Bereich der unteren Längskante 13 hat, im Querschnitt gesehen, exakt denselben Aufbau, steht jedoch, bezogen auf Fig. 3, Kopf.

Ersichtlicherweise ist in den beiden Abnähern 29 und 35 Material gespeichert, so daß bei intakten Nähten 31 und 34 die Stange 18 einen vorgegebenen Abstand von einem auf dem Sicherheitsnetz 11 gewählten Fixpunkt hat. Außerdem liegen die beiden Falten oder Abnäher 29, 35 im Inneren, d.h. sie sind von zwei Bereichen 38 und 39 überdeckt und geschützt, die sich zwischen der Naht 33 und den beiden Nähten 31 und 34 erstrecken.

Die Herstellung der in den Figuren insoweit gezeigten Sicherheitsnetzanordnung 8 geschieht wie folgt:

Zunächst wird ein entsprechend fester Gewebestreifen bereitgestellt, dessen Breite gleich der Länge zwischen den beiden bandförmigen Bereichen 26 und 36 entspricht. Sodann wird der bereitgestellte Gewebestreifen 25 an der Stelle, an der der Abnäher 29 entstehen soll, doppelt gelegt und im entsprechenden Abstand von der freien Kante des Umbugs wird die Geradstichnaht 31 angebracht. Diese Geradstichnaht 31 ist eine Naht aus Ober- und Unterfaden.

Sodann oder gleichzeitig wird auch im Bereich des anderen Randes der Gewebestreifen 25 zur Ausbildung des Abnähers 35 gefaltet und in demselben Abstand von der benachbarten Kante, d.h. der freien Kante des bandförmigen Bereiches 36 wird die weitere Geradstichnaht 34 genäht. Hierdurch wird ein Gewebestreifen erzeugt, der neben seinen beiden freien, über die gesamte Länge durchlaufenden Rändern zwei geschlossene, jeweils eine eigene Schlaufe bildende Abnäher 29, 35 enthält, und zwar auf derselben Seite des textilen Flächengebildes.

Der so vorbereitete Gewebestreifen wird nun unter Erzeugung der Schlaufe 19 umgeschlagen, wobei die beiden zuvor erzeugten schlaufenförmigen Abnäher 29 und 35 nach innen zu liegen kommen. Es können jetzt die beiden Geradstichnähte 32 und 33 angebracht werden.

Zum Schluß wird zwischen die freien Enden des Gewebestreifens 35 und damit zwischen die beiden Abnäher 29 und 35, wie gezeigt, das Sicherheitsnetz 11 eingeführt, wobei darauf geachtet wird, daß die Abnäher 29 und 35 nach oben in Richtung auf die Nähte 32 und 33 weisen. Schließlich wird noch mit den beiden Nähten 27 und 28 der Gewebestreifen 25 mit dem Sicherheitsnetz 11 vernäht. Auch die beiden Nähte 27 und 28 können Geradstichnähte sein, jeweils gebildet aus einem Ober- und einem Unterfaden.

Der beschriebene Vorgang wird für beide Längskanten 12, 13 durchgeführt und es können dann die betreffenden Stangen in die vorbereiteten Schlaufen 19 eingeführt werden, womit die Sicherheitsnetzanordnung 8 im wesentlichen fertig ist.

Die Wirkungsweise der neuen Sicherheitsanordnung 8 ist wie folgt:

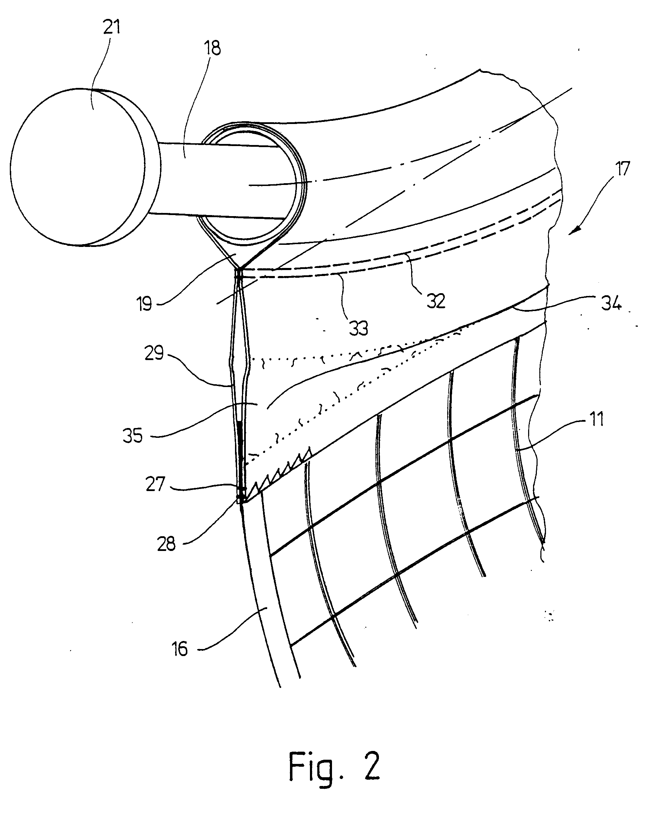

Wenn ein Kombi-PKW, in dem die neue Sicherheitsnetzanordnung 8, wie in Fig. 1 gezeigt, aufgespannt ist, in einen Auffahrunfall verwickelt wird, fängt es aus dem Laderaum in Richtung auf den Fahrgastraum geschleuderte Gegenstände 9 auf. Die auftretende kinetische Energie kann entweder im Material des Sicherheitsnetzes 11 selbst abgebaut werden oder in Vorkehrungen, die in der rohrförmigen Stange 18 untergebracht sind, wie dies beispielsweise aus der DE-A-40 10 209 bekannt ist. Diese energieverzehrende Maßnahme ist aber nicht in der Lage, Beschädigungen des Sicherheitsnetzes 11 zu verhindern, wenn infolge des Auffahrunfalles solche Deformationen an der Karosserie zustandekommen, die zu einer Vergrößerung des Abstandes zwischen den unteren Ösen 24 und jenen Punkten führen, an denen die pilzförmigen Köpfe 21 der Stange 18 eingehängt sind. Auch ohne Verformung der Karosserie können solche Abstandsveränderungen scheinbar auftreten, wenn die Stange 18 bzw. die in der unteren Schlaufe 22 sitzende, nicht weiter erkennbare Aussteifung infolge des Auftreffens des Gegenstandes 9 auf das Sicherheitsnetz 11 parabelförmig verbogen wird. Hierdurch werden in dem Sicherheitsnetz 11 Zugspannungen erzeugt, die parallel zu den seitlichen Kanten 14 und 15 liegen und damit die Nähte 27, 28, 31, 34, 33 und 32, bezogen auf Fig. 3, in vertikaler Richtung belasten. Die Festigkeit der einzelnen Nähte ist nun so gewählt, daß die Nähte 27, 28 und 32, 33 im wesentlichen halten, während die beiden Nähte 31 und 34 reißen. Dadurch kann sich der Gewebestreifen 25 unter gleichzeitigem Ausziehen der Abnäher 29, 35, wie in Fig. 2 gezeigt, verlängern. Die Fläche des Sicherheitsnetzes 11 paßt sich dadurch gleichsam dem geänderten Abstand zwischen den Ösen 24 und den in der Karosserie eingehängten Köpfen 21 der Stange 18 an. Fig. 2 zeigt, wie diese Nähte 31, 34 ein Stück weit von der jeweiligen Kante 14, 15 ausgehend aufreißen. Eine zusätzliche Längsspannung wird durch das Aufgehen der Abnäher 29, 35 von dem eigentlichen Sicherheitsnetz ferngehalten. Es reißt somit weder selbst noch reißen die Nähte 27, 28 auf bzw. ab.

## Patentansprüche

1. Zum Schutz des Fahrgastraumes gegenüber dem Laderaum von Kombi-PKW dienende Sicherheitsnetzanordnung (8),
mit einem von vier Längskanten (12,13,14,15) begrenzten Sicherheitsnetz (8), von dem sich im aufgespannten Zustand eine seiner Längskanten (12) unterhalb eines Fahrzeugdachs und zu diesem etwa parallel erstreckt, eine andere Längskante (13) etwa parallel zu einer Rücksitzlehne verläuft und die übrigen beiden Längskanten (14,15) zu Seitenwänden des PKW etwa parallel sind,
mit einer an einer ersten Längskante (12) angeordneten ersten Verankerungseinrichtung (18), über die das Sicherheitsnetz (11) lösbar mit dem Fahrzeug verbunden ist,
mit einer zweiten Verankerungseinrichtung (22), die einer zu der ersten Längskante (12) zumindest etwa parallel verlaufenden zweiten Längskante (13) zugeordnet ist und das Sicherheitsnetz (11) mit dem Fahrzeug verbindet,
mit einer dem Sicherheitsnetz (11) zugeordneten Längenausgleichseinrichtung (17), die in ihrem Ruhezustand mittels einer Verriegelungseinrichtung (31,34) komprimiert gehalten ist und bei Spannungsspitzen zwischen den beiden Verankerungseinrichtungen (18,22) unter Überwindung ihrer Verriegelungseinrichtung (31,34) aus dem komprimierten Zustand in einem zumindest teilweise expandierten Zustand überführt wird und das Sicherheitsnetz (11) in Bereichen bezüglich seiner Breite eine größere Länge zwischen den Verankerungseinrichtungen (18,22) aufweist.

2. Sicherheitsnetzanordnung nach Anspruch 1, dadurch gekennzeichnet, daß die Längenausgleichseinrichtung (17) sich zumindest über einen Abschnitt längs der betreffenden Längskante (12,13) erstreckt.

3. Sicherheitsnetzanordnung nach Anspruch 1, dadurch gekennzeichnet, daß die Längenausgleichseinrichtung (17) lediglich an einer Längskante (12) vorgesehen ist.

4. Sicherheitsnetzanordnung nach Anspruch 1, dadurch gekennzeichnet, daß sich die Längenausgleichseinrichtung (17) über die gesamte Länge der betreffenden Längskante (12) erstreckt.

5. Sicherheitsnetzanordnung nach Anspruch 1, dadurch gekennzeichnet, daR die Längenausgleichseinrichtung (17) ein flexibles Flächengebilde (25) aufweist, das wenigstens eine Falte (29,35) bildend gefaltet ist.

6. Sicherheitsnetzanordnung nach Anspruch 5, dadurch gekennzeichnet, daß das Flächengebilde (25) ein textiles Flächengebilde ist.

7. Sicherheitsnetzanordnung nach Anspruch 6, dadurch gekennzeichnet, daß das textile Flächengebilde (25) ein Gewebe ist.

8. Sicherheitsnetzanordnung nach Anspruch 5, dadurch gekennzeichnet, daß das Flächengebilde (25) ein Netz ist.

9. Sicherheitsnetzanordnung nach Anspruch 1, dadurch gekennzeichnet, daß die Verriegelungseinrichtung von einer Naht (31,34) gebildet ist.

10. Sicherheitsnetzanordnung nach Anspruch 9, dadurch gekennzeichnet, daß die Naht (31,34) eine Naht mit Ober- und Unterfaden ist.

11. Sicherheitsnetzanordnung nach Anspruch 1, dadurch gekennzeichnet, daß die eine Verankerungseinrichtung von einer Stange (18) gebildet ist, die sich längs einer Längskante (12) erstreckt, und daß parallel zu dieser Längskante (12) die Längenausgleichseinrichtung (17) liegt, die sich zwischen dem Sicherheitsnetz (11) und der Verankerungseinrichtung (18) erstreckt.

12. Sicherheitsnetzanordnung nach Anspruch 1, dadurch gekennzeichnet, daß eine der Verankerungseinrichtungen von einer Wickelwelle gebildet ist, an der das Sicherheitsnetz (11) mit einer Längskante (13) befestigt ist.

13. Sicherheitsnetzanordnung nach Anspruch 1, dadurch gekennzeichnet, daß zwei Längenausgleichseinrichtungen (17) vorgesehen sind, jede an einer von zwei zueinander zumindest angenähert parallel verlaufenden Längskanten (12,13).

14. Sicherheitsnetzanordnung nach Anspruch 5, dadurch gekennzeichnet, daß das Flächengebilde ein sich über die Breite des Sicherheitsnetzes (11) sich erstreckender Streifen (25) ist, der mit einer seiner Längskanten (26,36) an dem Sicherheitsnetz (11) vorzugsweise durch Nähen befestigt ist, von dort ausgehend zu der Verankerungseinrichtung (18,22) läuft, dort eine Schlaufe (19) bildet und zu dem Sicherheitsnetz (11) zurückläuft.

15. Sicherheitsnetzanordnung nach Anspruch 14, dadurch gekennzeichnet, daß die Schlaufe (19) durch eine parallel zu der Längskante (12) verlaufende Naht (32,33) fixiert ist.

16. Sicherheitsnetzanordnung nach Anspruch 14, dadurch gekennzeichnet, daß das Sicherheitsnetz (11) zwischen den beiden Lagen (26,36) des die Längenausgleichseinrichtung (17) bildenden Streifen (25) liegt.

17. Sicherheitsnetzanordnung nach Anspruch 14, dadurch gekennzeichnet, daß jede Lage (26,36) des die Längenausgleichseinrichtung (17) bildenden Streifens (25) einen über die gesamte Länge des Streifens (25) durchlaufenden Abnäher (29,35) enthält, wobei das Material des Abnähers (29,35) nach Innen eingeschlagen ist.

## Claims

1. Safety net arrangement (8) serving to protect the passenger compartment from the cargo space in estate cars,
with a safety net (8) defined by four longitudinal edges (12, 13, 14, 15), wherein, in expanded state, one of its longitudinal edges (12) extends beneath a vehicle roof and approximately parallel to this, another longitudinal edge (13) runs approximately parallel to a rear seat back, and the remaining two longitudinal edges (14, 15) are approximately parallel to the side walls of the automobile,
with a first attachment means (18), which is arranged on a first longitudinal edge (12) and via which the safety net (11) is detachably connected to the vehicle,
with a second attachment means (22), which is allocated to a second longitudinal edge (13) running at least approximately parallel to the first longitudinal edge (12) and joins the safety net (11) to the vehicle,
with an expansion compensation arrangement (17) allocated to the safety net (11), which is held compressed in its resting state by means of a locking means (31, 34) and in the case of tension peaks between the two attachment means (18, 22) is changed from the compressed state into an at least partially expanded state upon overcoming its locking means (31, 34), and in some areas the safety net (11) has a larger length between the attachment means (18, 22) relative to its width.

2. Safety net arrangement according to Claim 1, characterised in that the expansion compensation arrangement (17) extends at least over a portion along the respective longitudinal edge (12, 13).

3. Safety net arrangement according to Claim 1, characterised in that the expansion compensation arrangement (17) is only provided on one longitudinal edge (12).

4. Safety net arrangement according to Claim 1, characterised in that the expansion compensation arrangement (17) extends over the entire length of the respective longitudinal edge (12).

5. Safety net arrangement according to Claim 1, characterised in that the expansion compensation arrangement (17) has a flexible fabric (25), which is folded to form at least one fold (29, 35).

6. Safety net arrangement according to Claim 5, characterised in that the fabric (25) is a textile fabric.

7. Safety net arrangement according to Claim 6, characterised in that the textile fabric (25) is a woven fabric.

8. Safety net arrangement according to Claim 5, characterised in that the fabric (25) is a net.

9. Safety net arrangement according to Claim 1, characterised in that the locking means is formed by a seam (31, 34).

10. Safety net arrangement according to Claim 9, characterised in that the seam (31, 34) is a seam with an upper and lower thread.

11. Safety net arrangement according to Claim 1, characterised in that one attachment means is formed by a rod (18), which extends along a longitudinal edge (12), and that the expansion compensation arrangement (17) is located parallel to this longitudinal edge (12) and extends between the safety net (11) and the attachment means (18).

12. Safety net arrangement according to Claim 1, characterised in that one of the attachment means is formed by a wind-up roller, to which the safety net (11) is secured at one longitudinal edge (13).

13. Safety net arrangement according to Claim 1, characterised in that two expansion compensation arrangements (17) are provided, each on one of two longitudinal edges (12, 13) running at least approximately parallel to one another.

14. Safety net arrangement according to Claim 5, characterised in that the fabric is a strip (25) extending over the width of the safety net (11), and said strip is preferably secured at one of its longitudinal edges (26, 36) to the safety net (11) by means of seams and, starting from there, extends to the attachment means (18, 22), forms a loop (19) there, and extends back to the safety net (11).

15. Safety net arrangement according to Claim 14, characterised in that the loop (19) is fixed by means of a seam (32, 33) running parallel to the longitudinal edge (12).

16. Safety net arrangement according to Claim 14, characterised in that the safety net (11) is located between the two layers (26, 36) of the strip (25) forming the expansion compensation arrangement (17).

17. Safety net arrangement according to Claim 14, characterised in that each layer (26, 36) of the strip (25) forming the expansion compensation arrangement (17) contains a fan fold (29, 35) extending over the entire length of the strip (25), whereby the material of the fan fold (29, 35) is folded inwards.

## Revendications

1. Dispositif de filet de sécurité (8) destiné à protéger l'habitacle de l'espace à bagages dans des véhicules de type break,
avec un filet de sécurité (8) délimité par quatre bords longitudinaux (12, 13, 14, 15), parmi lesquels l'un des bords longitudinaux (12), à l'état tendu, s'étend au-dessous d'un toit de véhicule, sensiblement parallèlement à celui-ci, un autre bord longitudinal (13) s'étend sensiblement parallèlement à un dossier de siège arrière et les deux autres bords longitudinaux (14, 15) sont sensiblement parallèles au parois latérales du véhicule,
avec un premier dispositif d'accrochage (18) disposé sur un premier bord longitudinal (12), par l'intermédiaire duquel le filet de sécurité (11) peut être lié de manière démontable au véhicule,
avec un deuxième dispositif d'accrochage (22) qui est associé à un deuxième bord longitudinal (13) au moins sensiblement parallèle au premier bord longitudinal (12) et relie le filet de sécurité (11) au véhicule,
avec un dispositif de compensation de longueur (17) associé au filet de sécurité (11), qui, au repos, est maintenu comprimé au moyen d'un dispositif de verrouillage (31, 34) et, en présence de pointes de tension entre les deux dispositifs d'accrochage (18, 22), passe de l'état comprimé à un état au moins partiellement détendu en surmontant la force du dispositif de verrouillage (31, 34) et le filet de sécurité (11) dans des zones concernant sa largeur présente une plus grande longueur entre les dispositifs d'accrochage (18, 22).

2. Dispositif de filet de sécurité selon la revendication 1, caractérisé par le fait que le dispositif de compensation de longueur (17), s'étend sur une partie au moins le long du bord longitudinal (12, 13) concerné.

3. Dispositif de filet de sécurité selon la revendication 1, caractérisé par le fait que le dispositif de compensation de longueur (17) est prévu sur un bord longitudinal (12) seulement.

4. Dispositif de filet de sécurité selon la revendication 1, caractérisé par le fait que le dispositif de compensation de longueur (17), s'étend sur toute la longueur du bord longitudinal (12) concerne.

5. Dispositif de filet de sécurité selon la revendication 1, caractérisé par le fait que le dispositif de compensation de longueur (17), présente un produit plat (25) souple qui est plié en formant au moins un pli (29, 35).

6. Dispositif de filet de sécurité selon la revendication 5, caractérisé par le fait que le produit plat (25) est un produit plat textile.

7. Dispositif de filet de sécurité selon la revendication 6, caractérisé par le fait que le produit plat textile (25) est un tissu.

8. Dispositif de filet de sécurité selon la revendication 5, caractérisé par le fait que le produit plat (25) est un filet.

9. Dispositif de filet de sécurité selon la revendication 1, caractérisé par le fait que le dispositif de verrouillage est formé d'une couture (31, 34).

10. Dispositif de filet de sécurité selon la revendication 9, caractérisé par le fait que la couture (31, 34) est une couture à fil supérieur et fil inférieur.

11. Dispositif de filet de sécurité selon la revendication 1, caractérisé par le fait que l'un des dispositifs d'accrochage est formé d'une barre (18) qui s'étend le long d'un bord longitudinal (12) et que le le dispositif de compensation de longueur (17) qui s'étend entre le filet de sécurité (11) et le dispositif d'accrochage (18) est disposé parallèlement à ce bord longitudinal (12).

12. Dispositif de filet de sécurité selon la revendication 1, caractérisé par le fait que l'un des dispositifs d'accrochage est formé d'une barre d'enroulement à laquelle le filet de sécurité (11) est fixé par un bord longitudinal (13).

13. Dispositif de filet de sécurité selon la revendication 1, caractérisé par le fait qu'il est prévu deux dispositifs de compensation de longueur (17) chacun sur un de deux bords longitudinaux (12, 13) au moins sensiblement parallèles.

14. Dispositif de filet de sécurité selon la revendication 5, caractérisé par le fait que le produit plat (25) est une bande (25) qui s'étend sur la largeur du filet de sécurité (11), est fixée au filet de sécurité (11) par l'un de ses bords longitudinaux (26, 36), de préférence par des coutures, de là s'étend en direction du dispositif d'accrochage (18, 22), forme une boucle (19) à ce niveau et repart en direction du filet de sécurité (11)

15. Dispositif de filet de sécurité selon la revendication 14, caractérisé par le fait que la boucle (19) est fixée par une couture (32, 33) parallèle au bord longitudinal (12).

16. Dispositif de filet de sécurité selon la revendication 14, caractérisé par le fait que le filet de sécurité (11) est disposé entre les deux couches (26, 36) de la bande (25) formant le dispositif de compensation de longueur (17).

17. Dispositif de filet de sécurité selon la revendication 14, caractérisé par le fait que chaque couche (26, 36) de la bande (25) formant le dispositif de compensation de longueur (17) comprend un dispositif d'ouverture de la couture (29, 35) qui s'étend sur toute la longueur de la bande (25) le matériau du dispositif d'ouverture de la couture (29, 35) étant disposé vers l'intérieur.
